Europäisches Patentamt

(19) European Patent Office

Office européen des brevets

(11) Publication number : **0 405 384 B1**

# (12) EUROPEAN PATENT SPECIFICATION

(45) Date of publication of patent specification :
08.11.95 Bulletin 95/45

(51) Int. Cl.$^6$ : **H04L 1/24, H04L 1/20**

(21) Application number : **90111998.2**

(22) Date of filing : **25.06.90**

(54) **Apparatus for estimating communication link quality.**

(30) Priority : **28.06.89 US 372978**

(43) Date of publication of application :
02.01.91 Bulletin 91/01

(45) Publication of the grant of the patent :
08.11.95 Bulletin 95/45

(84) Designated Contracting States :
DE GB IT

(56) References cited :
EP-A- 0 003 232
US-A- 3 643 027
US-A- 3 898 564
US-A- 4 827 489

(73) Proprietor : **Hughes Aircraft Company**
**7200 Hughes Terrace**
**P.O. Box 45066**
**Los Angeles, California 90045-0066 (US)**

(72) Inventor : **Russel, Gary S.**
**538 Ponce**
**Placentia, California 92670 (US)**
Inventor : **Hoyt, Eugene P.**
**327 Avenida Margarita**
**Anaheim Hills, California 92807 (US)**

(74) Representative : **Witte, Alexander, Dr.-Ing.**
**Witte, Weller, Gahlert & Otten**
**Patentanwälte**
**Rotebühlstrasse 121**
**D-70178 Stuttgart (DE)**

## Description

The present invention relates to apparatus for estimating the quality of a communications link over which M-ary encoded data is being transmitted, and more particularly to an apparatus for providing bit error rate estimates simply and accurately even on links where signal-to-noise strengths are likely to vary over a wide range.

For a given modulation scheme, there is a known statistical relationship between the transmitted signal-to-noise strength and the received bit error rate. By increasing the transmitted signal strength, the bit error rate can be reduced. See, e.g., "Principles of Communication Engineering," Wozencraft & Jacobs, Wiley & Sons, 1965, at Chapters 4 and 5. Increasing the transmitted signal strength unnecessarily is not desirable for many applications, particularly tactical situations where it is desired to minimize detection of transmitted signals by unauthorized persons. Therefore, it is desirable to be able to estimate the communication link quality, i.e., the signal-to-noise ratio on the link, so that the transmit signal strength may be adaptively adjusted to maintain a specified bit error rate.

Some prior apparatus have been utilized to estimate the bit error rate at the receiver and thereby obtain an estimate of the link quality. However, these apparatus have suffered from several disadvantages, including the relative slow speed at which the estimate is made. One technique is to transmit a predetermined long sequence of bits, and then compare the received bits with the known bit values as they are received. When a very low bit error rate is required, the length of such a predetermined sequence of bits is so long that the time required to transmit the sequence is prohibitively long. Furthermore the US-A-3 898 564 discloses a line quality monitoring arrangement, where the regenerated PCM signal is fed to a line simulator and then subtracted from the received line signal in order to produce an analog line error signal.

## SUMMARY OF THE INVENTION

An apparatus is disclosed for estimating the quality of a digital communications link over which successive symbols, each comprising a plurality of M-ary encoded channel bits, are transmitted. The apparatus comprises means for receiving the channel bit symbols, and means for demodulating the received symbols to provide a demodulated set of received channel bits, and a M-ary decoder for decoding each M-ary symbol into a set of M-ary decoded bits.

The link quality estimator comprises a means for providing a version of the received channel bit stream delayed by one M-ary symbol period. The link quality estimator further comprises means for converting each set of M-ary decoded bits into an auxiliary set of channel bits in accordance with the M-ary encoding scheme.

The estimator further comprises means for performing a channel bit-by-bit comparison between the delayed version of the channel bits and the auxiliary set of channel bits to provide a comparison result signal indicative of the number of estimated channel bit errors. Means responsive to the result signal provides a link quality signal indicative of the bit error rate detected over one or more received channel symbols.

## BRIEF DESCRIPTION OF THE DRAWINGS

These and other features and advantages of the present invention will become more apparent from the following detailed description of an exemplary embodiment thereof, as illustrated in the accompanying drawings, in which:

FIG. 1 is a simplified block diagram of an exemplary transmitter comprising the data communication link.

FIG. 2 is a simplified block diagram of a receiver embodying the invention.

FIG. 3 is a simplified block diagram of a receiver embodying the invention and employing phase coherent demodulation.

FIG. 4 is a graphical illustration of the expected performance characteristics of the link quality estimator as shown in FIG. 3, plotting the number of correct decisions as a function of the channel bit energy-to-noise spectral density over 800 channel bits.

## DETAILED DESCRIPTION OF THE PREFERRED EMBODIMENTS

### Overview of the Invention

The invention is a communication link quality estimator (LQE) having the capability of simply and accurately estimating the link bit error rate, to allow for quick adaptation of the communication link resources to maintain a specified bit error rate, even on links where the signal-to-noise strength are likely to vary over a wide range. The invention contemplates the use of a M-ary encoding scheme which provides sufficient gain in the received energy-to-noise spectral density relative to the channel bit energy-to-noise spectral density to provide the required output bit-error-rate (BER). A M-ary encoding scheme is one in which data bits are encoded into M-ary symbols, in which there can be M unique symbol representations. The LQE can be used in conjunction with coherent or non-coherent signalling and with or without error correction decoders. The estimate of link quality is found by comparing the received channel bit symbol of L bits with an auxiliary channel bit sequence of L bits generated from the best estimate of the M-ary symbol after decoding. Detected errors are counted and averaged over a fixed number of M-ary symbols. This estimate can then be employed by a processor, which can, e.g., use the information to either increase or decrease the transmitted power output or adjust the data rate to optimize the use of communication resources. The LQE is attractive in systems which use non-coherent demodulation in which the in-phase and quadrature channels may be adaptively quantized and thus represent magnitudes rather than absolute bit levels.

The Preferred Embodiments

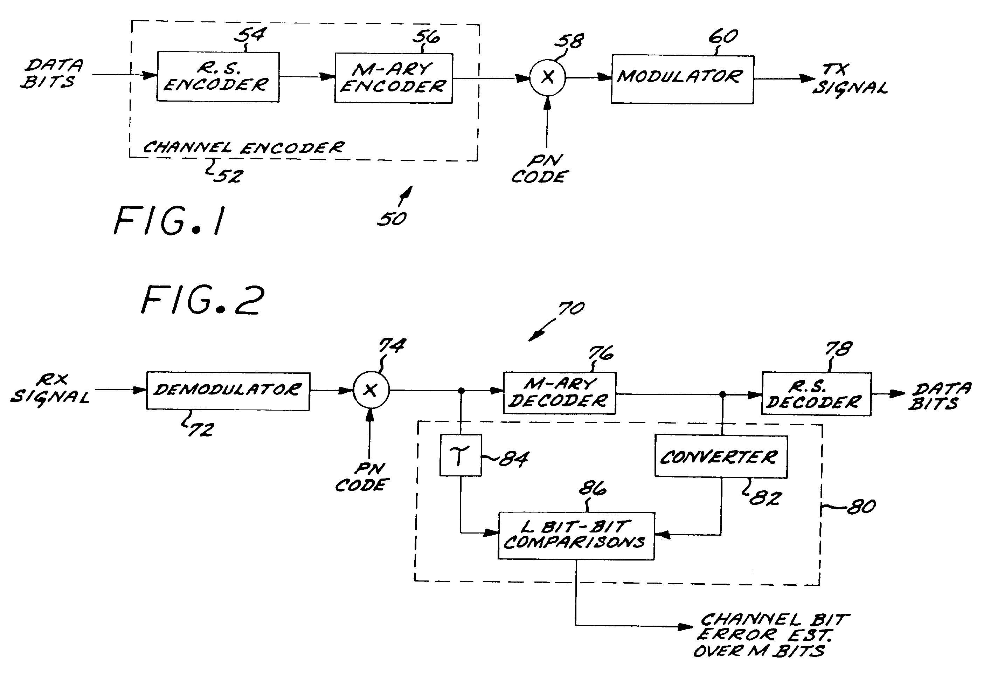

The simplified architecture of an exemplary transmitter 50 forming a part of a data communication link is shown in FIG. 1. The channel encoder 52 can be of any format which effectively spreads the data bit energy over a larger number of channel bits. As an example, the source encoder 52 comprises a Reed-Solomon ("RS") (16,8) forward error correction encoder 54 followed by a M-ary symbol encoder 56 (here M = 16). Both encoders 54, 56 are used to add redundancy to the input data to facilitate correct reception of bits at the receiver. This preliminary "spreading" of the data is exploited in accordance with the invention in detecting and counting errors for accurate signal strength estimation, as will be described below. This spreading of the data bits shall hereinafter be referred to as M-ary encoding. The M-ary encoding can be used with or without error correction coding, such as Reed-Solomon encoding.

In an M-ary orthogonal signalling scheme, the signal waveforms are chosen to be orthogonal to minimize cross-correlations at the receiver. For a 16-ary system, one possible implementation uses 16 orthogonal 16-bit patterns. One possible representation is to provide an L-bit orthogonal sequence, where L is equal to or greater than M. Thus, in one example, M and L both have values of 16. These patterns are the M-ary channel bit symbols. A "channel bit" is one of L=16 sub-elements of this M-ary symbol.

To illustrate the energy spreading using the above example,

$$\frac{E_c}{N_o} = S\left(\frac{E_b}{N_o}\right)$$

where:

$E_c/N_o$ = channel bit energy-to-noise spectral density,

$E_b/N_o$ = data bit energy-to-noise spectral density, and

S = spread ratio.

This is due entirely to the spreading of the data bit energy over the entire 16 bit channel symbol. In effect, for every 2 data bits in this example, there are 14 additional channel bits, providing a 16:2 or 8:1 energy ratio. (S = 1/8 for this example.) A coded 16-ary symbol (using (16,8) Reed Solomon coding) contains 2 data bits. Therefore, there are, in this example, 8 channel bits per data bit independent of data rate. In decibels this amounts to

$$\left(\frac{E_c}{N_o}\right)_{dB} = \left(\frac{E_b}{N_o}\right)_{dB} - 9\ dB$$

The fact that the channel bit energy-to-noise density is 9 dB less than the data bit energy-to-noise density is used at the receiver as part of the link quality estimator to count bit errors.

The encoded data from the channel encoder 52 is mixed with pseudonoise (PN) chip data with a PN code by modulator 58 in accordance with known spread spectrum techniques, and then modulated on an RF carrier by modulator 60 which provides the transmitted signal. As will be appreciated by those skilled in the art, the number of PN chips per channel bit depends on the data rate being transmitted and the spread spectrum processing gain assigned to the link.

The transmitter architecture illustrated in FIG. 1 is well known in the art. The use of a pseudonoise, spread spectrum code overlay is not essential to the operation of the link quality estimator. It does, however, represent a common encoding practice in high anti-jam communications systems in which the link quality estimator might be employed.

A receiver 70 comprising the data communication link is illustrated in the simplified block diagram of FIG. 2. The received signal is demodulated by a conventional demodulator 72 to provide a received M-ary encoded PN chip stream. The demodulator 72 maps received IF signal levels into corresponding PN chips in accordance with the particular M-ary symbol encoding pattern employed by the link. The received PN chip stream is passed through the PN despreader and chip integrator 74, from which the received channel bit stream is taken. As is well known, a function of the integrator 74 is to sum the energy over several PN chips to recover the channel bits. The resulting channel bits are then decoded by an M-ary decoder 76 (in this example M = 16) to provide sets of Reed-Solomon encoded data bits. The output of the decoder 76 is then decoded by the Reed-Solomon decoder 78 to provide the received data bits.

The operation of the receiver thus far described above is conventional. In accordance with the invention, the receiver 70 further comprises a link quality estimator ("LQE") 80. The LQE 80 receives the decoded M-ary symbols from decoder 76. Each decoded M-ary symbol comprises 4 RS code symbols in this example, and is mapped by converter 82 into an auxiliary L bit (16-bit) symbol representation for the decoded M-ary symbol in accordance with the particular M-ary encoding scheme employed for the particular application. If the data communication link is error free, this reconstituted auxiliary 16-bit symbol should be identical to the 16 channel bits which were input to the decoder 76. The converter 82 in one preferred embodiment comprises a look-up table, storing a predetermined 16-channel bit symbol representation for each possible value of the 4-bit decoded M-ary symbol. These symbol representations are the same representations used by the 16-ary encoder 56 of the transmitter 50 to encode the data to be transmitted. An exemplary look-up table is depicted in Table I.

## 16-ARY CODE MAPPING

### TABLE I

| 4-Bit Symbol | 16-ARY Code | | | |
|---|---|---|---|---|
| 0000 | 1110 | 1101 | 1110 | 0010 |
| 0001 | 1110 | 1101 | 0001 | 1101 |
| 0010 | 1011 | 0111 | 1000 | 1011 |
| 0011 | 1011 | 0100 | 0111 | 0111 |
| 0100 | 1101 | 1110 | 0010 | 1110 |
| 0101 | 1101 | 0001 | 1101 | 1110 |
| 0110 | 0111 | 1000 | 1011 | 1011 |
| 0111 | 0100 | 0111 | 0111 | 1011 |
| 1000 | 1110 | 0010 | 1110 | 1101 |
| 1001 | 0001 | 1101 | 1110 | 1101 |
| 1010 | 1000 | 1011 | 1011 | 0111 |
| 1011 | 0111 | 0111 | 1011 | 0100 |
| 1100 | 0010 | 1110 | 1101 | 1110 |
| 1101 | 1101 | 1110 | 1101 | 0001 |
| 1110 | 1011 | 1011 | 0111 | 1000 |
| 1111 | 0111 | 1011 | 0100 | 0111 |

The LQE 80 further comprises a delay device 84 which also receives the channel bit data being input to the decoder 76 and delays this data by one M-ary symbol period $\tau$, equal to the time duration of 16 channel bits. The delayed channel bit data and the corresponding symbol representation are both provided to the comparator 86 for a channel bit-by-bit comparison to determine the number of different bits, i.e. errors (or equivalently the number of correct channel bits). This number is then employed to provide the channel bit error estimate. Typically, the number of channel bit errors will be accumulated over some predetermined number n of channel bits. The number n is chosen in accordance with the requirements of the particular application, e.g., to meet the required bit error estimate update rate.

The channel bit is employed for forming the link quality estimate, rather than the coded data bit output of the 16-ary demodulator 72 or the decoded data bit output of the Reed Solomon decoder 78 because of the

4

very steep curve of user data BER versus $E_b/N$, where N refers to a combination of thermal noise $N_o$ and jammer noise $N_j$, and because of the very small value of data bit error rate (BER) at the RS decoder 78 output. The channel bit energy-to-noise spectral density ($E_c/N$) is 9 dB lower than the coded data input to the RS decoder 78, as discussed above, causing the channel bit error rate to be much higher than the BER of the data link output from the decoder 78. The RS code symbol energy-to-spectral-noise-density ratio at the output of the 16-ary demodulator 76 is 6 dB higher than that at the output of the PN chip integrator 74, from which the channel bit stream is taken. For example, when the channel bit error is 0.292 for $E_c/N$ = -1.4 dB, the RS decoder 78 output data BER is $10^{-6}$. This higher value of BER for the channel bit stream can be measured much more accurately within a given LQE measurement period than the corresponding output data BER. Also, the slope of the channel BER versus $E_c/N$(dB) is much more linear in a typical region of interest (-5dB < $E_c/N$ < +1dB), making it possible to measure channel BER over a much wider range. The latter factor is important is important in accurately measuring the change of the link quality estimate for the large change in $E_c/N$, which often occurs during jamming.

For non-coherent symbol demodulation, incoming in-phase (I) and quadrature (Q) signals are received as vectors with weighted amplitudes. These are fed to the M-ary decoder 76 for signal demodulation and finally to the RS decoder 78. After identification of the received M-ary symbol by the decoder 76, the L-bit auxiliary representation of that symbol, using converter 82, is looped back for comparison with the incoming signal which has been delayed by the L-bit symbol time.

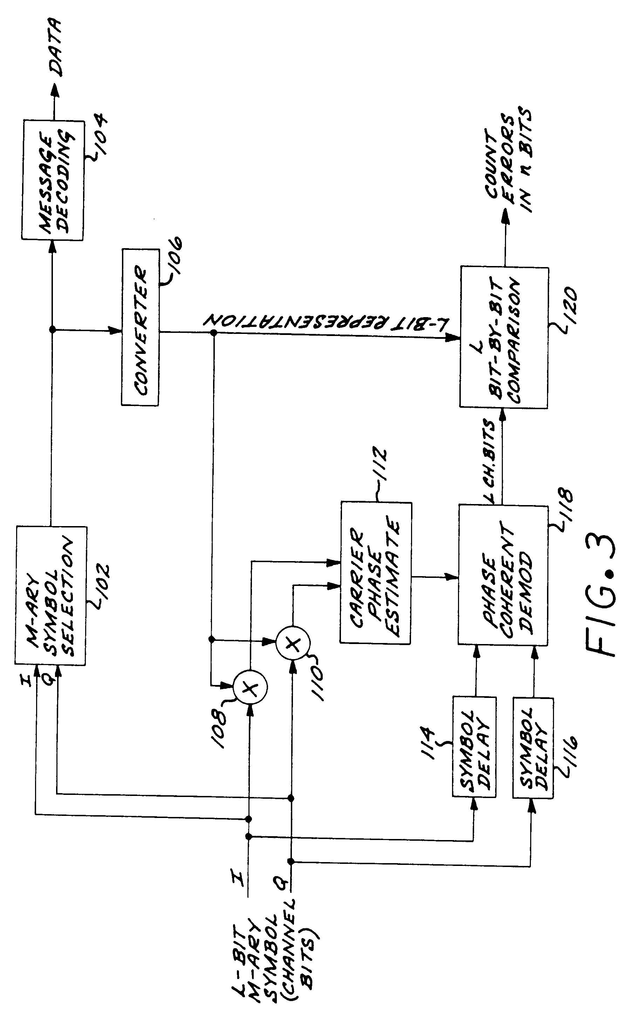

A phase coherent demodulation can be performed on the delayed incoming signal by estimating the carrier phase. An exemplary block diagram of a system using phase coherent demodulation is shown in FIG. 3.

In the embodiment of FIG. 3, the in-phase (I) and quadrature (Q) components of the L-bit, M-ary symbol, i.e., the channel bits, are sent to the M-ary decoder 102 for selection of the transmitted M-ary symbol. The decoded M-ary symbol is then fed to the message decoder 104 for message decoding to recover the data bits. Here elements 102 and 104 are analogous to elements 76 and 78 of the embodiment shown in FIG. 2, and are conventional in function and operation. Also as in FIG. 2, the M-ary symbol representation is also fed to converter 106 (corresponding to converter 82 in FIG. 2) for conversion, according to the particular M-ary encoding scheme, to an auxiliary channel bit symbol representation.

The I and Q signal components are multiplied by the L-bit representation at multipliers 108 and 110, and the respective products are supplied to a carrier phase estimator 112. In this embodiment, the carrier phase estimate is restricted to one of four quadrants, $\pm 45$ degrees and $\pm 135$ degrees. The quadrant of the carrier phase can be determined from the signs of the I and Q channels of the carrier. The carrier phase estimate is employed by a phase coherent demodulator 118 to coherently demodulate the I and Q channels to an L-bit channel bit symbol. The I and Q signal components are also fed to phase coherent demodulator 118 via symbol delay devices 114 and 116. The phase coherent demodulator 118 extracts the binary representation of each channel bit once the carrier phase is known. A bit-by-bit comparison of the channel bit symbol and the auxiliary symbol representation is then carried out by a comparator 120, and the channel bit errors counted as in FIG. 2 to determine the estimated bit error rate.

Performance Characterization

The performance of the estimated carrier phase implementation of FIG. 3 can be approximated by using ideal phase coherent demodulation where

$$BER = Q\,(E_{DS}/2N_o)^{1/2}$$

where

BER = average bit error rate

$E_{DS}$ = despread energy/bit

$$Q(x) = 1/(2\pi)^{1/2} \int_x^\infty e^{-z^2/2}\, dz$$

The estimate is then formed by summing n bits, each with probability p of being correct of

$$p = 1 - BER$$

The estimate of signal-to-noise and hence, link quality, is then an approximate inversion of the relationship between the BER and $E_b/N_o$. It is assumed that the bit errors at the output of the M-ary demodulator are binomially distributed with average rate BER, a good assumption after spread spectrum demodulation.

For n trials, assuming the binominal distribution, the average number of errors $\overline{N}$ and the rms variation ($\sigma$)

are

$$\overline{N} = n \times BER$$

$$\sigma = \overline{N}(1 - BER)^{\frac{1}{2}}$$

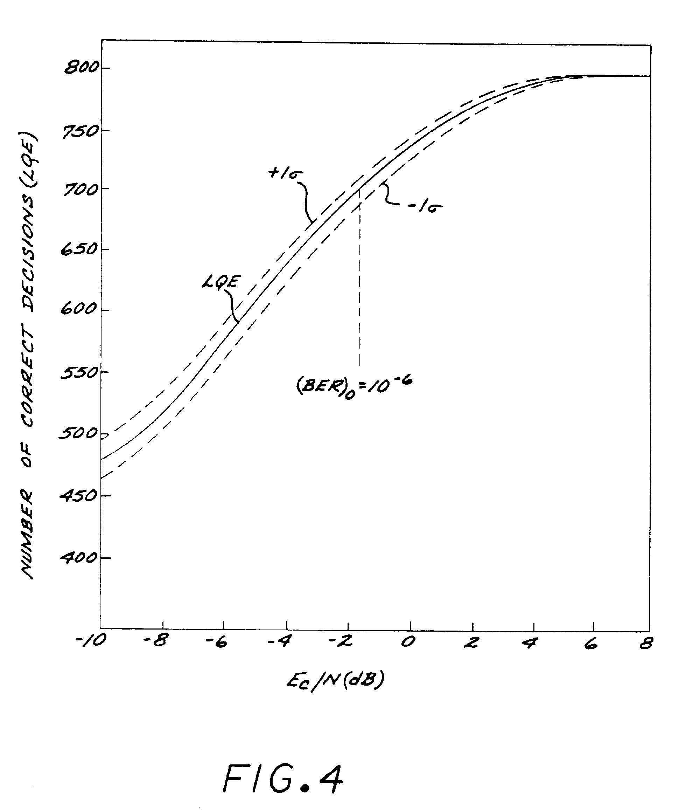

FIG. 4 shows, for errors counted over 800 channel bits, the expected number of correct decisions (800 - $\overline{N}$) versus $E_c/N$, with the one sigma variation about the curve to show the accuracy of the estimate.

To illustrate the sensitivity of the LQE, assume a system with the following parameters:

1. 16-channel bit 16-ary symbolling;

2. 1/2 rate coding using Reed-Solomon (16, 8) decoding;

3. BER = $10^{-6}$ required at the output of the 16, 8) decoder; and

4. n = 800 samples.

Then, for a BER = $10^{-6}$ at the output of the decoder, an $E_b/N$ = 7.8 dB is required at the RS decoder input, using non-coherent 16-ary demodulation. Using 16-channel bit 16-ary orthogonal symbols with the 1/2 rate coding,

$$E_b/N = 8 \times E_{16}/N$$

Thus,

$$\frac{E_{16}}{N} = \frac{E_b}{N} - 9 \text{ dB}$$

This point is shown in FIG. 4. The one sigma error of the estimate at this point is approximately 13.

As noise increases or decreases gradually on the channel, the LQE output increases/decreases rapidly, thus allowing for quick reallocation of resources as necessary. The LQE sensitivity is dependent upon both the desired operating point and amount of M-ary/RS coding symbol spreading.

The main purpose of the Link Quality Estimator is to quickly and accurately assess the "health" of the link. The output is a count of channel bit errors over n channel bits, where n is a parameter to be determined by the system designer, and would depend on the required time of the estimate, data rates, spreading ratios, and the like. The estimate can then be used for a variety of adaptive control functions. Some of these could include:

(a) Power Control - when the estimate drops below a present threshold, a message is sent to the transmitter to increase its output power. For low probability of intercept considerations, the reverse of this can also be implemented.

(b) Time Slot Assignments - time slots for a particular user can be increased/ decreased for resource optimization in TDMA (Time Division Multiple Access) network configuration.

(c) Routing Control - the LQE can be used to make routing decisions in a network attempting optimized message routing.

These are just a few examples of applications of the LQE. Numerous other applications are possible depending upon the specific system application.

It is understood that the above-described embodiment is merely illustrative of the possible specific embodiments which may represent principles of the present invention. Other arrangements may readily be devised in accordance with these principles by those skilled in the art unless they depart from the scope of the claims.

## Claims

1. A digital data communication link comprising a digital data receiver (70) for receiving data over said link employing a M-ary encoding scheme, and over which successive symbols, each comprising a plurality of M-ary encoded channel bits, are transmitted in modulated form, the receiver (70) comprising:

   - a demodulator (72) for demodulating the received signal to recover said channel bit symbols, and
   - a M-ary decoder (76) for M-ary decoding said respective channel bit symbols into corresponding sets of M-ary decoded bits in accordance with said M-ary scheme,

   characterized by a communication link quality estimator (80) having:

   - means (84; 114, 116) for providing a time-delayed version of each received M-ary channel bit symbol;
   - means (82; 106) responsive to each said set of M-ary decoded bits for providing an auxiliary M-ary symbol representation of channel bits in accordance with said M-ary encoding scheme;
   - means (86; 120) for performing a channel bit-by-bit comparison between said delayed version of said M-ary channel bit symbol and said auxiliary symbol representation to determine the discrepancies between corresponding channel bit values, and for providing a link quality signal indicative of the number of detected channel bit discrepancies or errors detected over one or more M-ary channel symbols.

2. The link of Claim 1, characterized in that said means (82; 106) for providing an auxiliary M-ary symbol representation comprises means for providing a preassigned M-ary symbol representation corresponding to a given set of M-ary decoded bits.

3. The link of Claim 2, characterized in that said means (82; 106) for providing an auxiliary M-ary symbol representation comprises a look-up table for storing said preassigned symbol representations, said table being addressable by the set of M-ary decoded bits.

4. The link of any of Claims 1 through 3, characterized in that said link quality estimator (80) comprises means for counting the number of bit errors between corresponding bits of said time-delayed channel bit symbols and said auxiliary symbol representations detected over a predetermined number of bits.

5. The link of any of Claims 1 through 4, having a transmitter (50), characterized in that transmitted signals are encoded (52) in accordance with an error-correcting coding scheme, and that said receiver (70) comprises error-correcting decoder means (78) responsive to said sets of M-ary decoded bits to provide output data bits.

6. The link of any of Claims 1 through 5, characterized in that said means (84; 114, 116) for providing a time-delayed version of each received M-ary channel bit symbol delay each channel bit by one M-ary symbol period.


**Patentansprüche**

1. Nachrichtenverbindung für digitale Daten, mit einem Empfänger (70) für digitale Daten, um über die Verbindung unter Einsatz eines M Symbole verwendenden Codierverfahrens Daten zu empfangen, wobei über die Verbindung aufeinanderfolgende Zeichen, von denen jedes eine Vielzahl von mit M Symbolen codierten Kanalbits umfaßt, in modulierter Form übertragen werden, wobei der Empfänger (70)
   - einen Demodulator (72) zur Demodulation des empfangenen Signales umfaßt, um die Kanalbit-Zeichen wiederzugewinnen, und
   - einen M-er Decoder (76) aufweist, um die entsprechenden Kanalbit-Zeichen in Übereinstimmung mit dem M-er Schema in entsprechende Sätze von mit M Symbolen codierte Bits unter Verwendung von M Symbolen zu decodieren,
   gekennzeichnet durch eine Schätzvorrichtung (80) für die Qualität der Nachrichtenverbindung, mit:
   - Mitteln (84; 114, 116), um eine zeitverzögerte Version eines jeden M-er Kanalbit-Zeichens zu liefern;
   - Mitteln (62; 106), die auf jeden Satz von mit M Symbolen codierten Bits ansprechen, um in Übereinstimmung mit dem M-er Codierverfahren eine M-er Zeichen-Hilfsdarstellung von Kanalbits zu liefern;
   - Mitteln (86; 120), um einen Vergleich Kanalbit für Kanalbit zwischen der verzögerten Version des M-er Kanalbit-Zeichens und der Zeichen-Hilfsdarstellung durchzuführen, um die Abweichungen zwischen entsprechenden Kanalbit-Werten zu bestimmen und ein Signal für die Verbindungsqualität zu liefern, das für die Anzahl von detektierten Kanalbit-Abweichungen oder -fehlern kennzeichnend ist, die für ein oder mehrere M-er Kanalzeichen detektiert wurden.

2. Verbindung nach Anspruch 1, dadurch gekennzeichnet, daß die Mittel (82; 106) zur Bereitstellung einer M-er Zeichen-Hilfsdarstellung Mittel umfassen, um eine vorprogrammierte M-er Zeichen-Darstellung zu liefern, die einem gegebenen Satz von mit M Symbolen codierten Bits entspricht.

3. Verbindung nach Anspruch 2, dadurch gekennzeichnet, daß die Mittel (82; 106) zum Bereitstellen einer M-er Zeichen-Hilfsdarstellung eine Nachschlagetabelle umfassen, um die vorprogrammierten Zeichen-Darstellungen zu speichern, wobei die Tabelle durch den Satz von mit M Symbolen decodierten Bits adressierbar ist.

4. Verbindung nach einem der Ansprüche 1 bis 3, dadurch gekennzeichnet, daß die Schätzvorrichtung (80) für die Qualität der Verbindung Mittel umfaßt, um die Anzahl von Bitfehlern zwischen entsprechenden Bits der zeitverzögerten Kanal-Zeichen und der Zeichen-Hilfsdarstellungen über eine vorgegebene Anzahl von Bits zu zählen.

5. Verbindung nach einem der Ansprüche 1 bis 4, mit einem Sender (50), dadurch gekennzeichnet, daß gesendete Signale in Übereinstimmung mit einem fehlerkorrigierenden Codierverfahren codiert (52) werden, und daß der Empfänger (70) fehlerkorrigierende Decodermittel (78) enthält, die auf den Satz von mit M Symbolen decodierten Bits ansprechen, um Ausgangdatenbits zu erzeugen.

6. Verbindung nach einem der Ansprüche 1 bis 5, dadurch gekennzeichnet, daß die Mittel (84; 114, 116) zum Bereitstellen einer zeitverzögerten Version eines jeden empfangenen M-er Kanalbit-Zeichens jedes Kanalbit um eine M-er Zeichenperiode verzögern.

## Revendications

1. Une liaison de transmission de données numérique comprenant un récepteur de données numérique (70) qui est destiné à recevoir des données transmises par la liaison en employant une technique de codage M-aire, et par laquelle des symboles successifs, comprenant chacun un ensemble de bits de canal codés sous forme M-aire, sont transmis sous forme modulée, le récepteur (70) comprenant :
   - un démodulateur (72) pour démoduler le signal reçu de façon à récupérer les symboles de bits de canal, et
   - un décodeur M-aire (76) pour effectuer un décodage M-aire des symboles de bits de canal respectifs, pour donner des ensembles correspondants de bits décodés M-aires conformément à la technique Maire précitée,
   caractérisée par un estimateur de qualité de liaison de communication (80) comprenant :
   - des moyens (84 ; 114, 116) pour produire une version retardée dans le temps de chaque symbole de bit de canal M-aire reçu ;
   - des moyens (82 ; 106) qui réagissent à l'ensemble de bits décodés Maires de façon à produire une représentation de symbole M-aire auxiliaire de bits de canal, conformément à la technique de codage M-aire ;
   - des moyens (86 ; 120) pour effectuer une comparaison, bit de canal par bit de canal, entre la version retardée du symbole de bit de canal Maire et la représentation de symbole auxiliaire, pour déterminer les discordances entre les valeurs de bit de canal correspondantes, et pour fournir un signal de qualité de liaison indiquant le nombre de discordances de bit de canal détectées, ou des erreurs détectées sur un ou plusieurs symboles de canal M-aires.

2. La liaison de la revendication 1, caractérisée en ce que les moyens (82 ; 106) qui sont destinés à produire une représentation de symbole M-aire auxiliaire comprennent des moyens pour produire une représentation de symbole M-aire attribuée à l'avance, correspondant à un ensemble donné de bits décodés M-aires.

3. La liaison de la revendication 2, caractérisée en ce que les moyens (82 ; 106) qui sont destinés à produire une représentation de symbole M-aire auxiliaire comprennent une table qui est destinée à enregistrer les représentations de symboles attribuées à l'avance, cette table pouvant être adressée par l'ensemble de bits décodés M-aires.

4. La liaison de l'une quelconque des revendications 1 à 3, caractérisée en ce que l'estimateur de qualité de liaison (80) comprend des moyens pour compter le nombre d'erreurs de bits entre des bits correspondants des symboles de bits de canal retardés dans le temps et les représentations de symboles auxiliaires qui sont détectées sur un nombre de bits prédéterminé.

5. La liaison de l'une quelconque des revendications 1 à 4, comportant un émetteur (50), caractérisée en ce que les signaux émis sont codés (52) conformément à une technique de codage de correction d' erreurs, et en ce que le récepteur (70) comprend des moyens décodeurs correcteurs d'erreurs (78) qui réagissent aux ensembles de bits décodés M-aires en produisant des bits de données de sortie.

6. La liaison de l'une quelconque des revendications 1 à 5, caractérisée en ce que les moyens (84 ; 114, 116) qui sont destinés à produire une version retardée de chaque symbole de bit de canal M-aire reçu, retardent chaque bit de canal d'une période de symbole M-aire.

# FIG. 1

CHANNEL ENCODER *52*

DATA BITS → [ R.S. ENCODER *54* ] → [ M-ARY ENCODER *56* ] → (X) *58* → [ MODULATOR *60* ] → TX SIGNAL

PN CODE

*50*

# FIG. 2

*70*

RX SIGNAL → [ DEMODULATOR *72* ] → (X) *74* → [ M-ARY DECODER *76* ] → [ R.S. DECODER *78* ] → DATA BITS

PN CODE

[ T ] *84*    [ CONVERTER *82* ]

[ L BIT-BIT COMPARISONS *86* ]

*80*

CHANNEL BIT ERROR EST. OVER M BITS

FIG. 3

FIG.4